# EUROPÄISCHE PATENTSCHRIFT

(11) **EP 1 036 684 B1**
(45) Veröffentlichungstag und Bekanntmachung des Hinweises auf die Patenterteilung: **09.06.2004**
(21) Anmeldenummer: 00100620.4
(22) Anmeldetag: 13.01.2000
(51) Int. Cl.: B60J 7/047

(54) **Dachaufbau für ein Fahrzeug**
Roof structure for a vehicle
Structure de toit pour un véhicule

(30) Priorität: 18.03.1999 DE 19912105
(43) Veröffentlichungstag der Anmeldung: 20.09.2000
(73) Patentinhaber: Dr.Ing. h.c.F. Porsche Aktiengesellschaft, 70435 Stuttgart (DE)
(72) Erfinder: Marchart, Horst, 70374 Stuttgart (DE); Homann, Bodo, 71296 Heimsheim (DE)

(56) Entgegenhaltungen:
- EP-A- 0 734 894
- US-A- 2 122 712
- US-A- 4 801 174
- US-A- 4 852 938
- BAYER J ET AL: "DER NEUE PORSCHE 911 TARGA. NEW PORSCHE 911 TARGA" ATZ AUTOMOBILTECHNISCHE ZEITSCHRIFT,DE,FRANCKH'SCHE VERLAGSHANDLUNG. STUTTGART, Bd. 97, Nr. 10, 1. Oktober 1995 (1995-10-01), Seite 693,695,697 XP000535668 ISSN: 0001-2785

## Beschreibung

Die Erfindung betrifft einen Dachaufbau für ein Fahrzeug mit einer großflächigen, von aufbauseitigen Trägerabschnitten umgebenen Dachöffnung gemäß dem Oberbegriff des Patentanspruchs 1.

Aus der gattungsgemäßen US-PS 4,801,174 geht ein Dachaufbau für ein Fahrzeug mit einer großflächigen von aufbauseitigen Trägerabschnitten umgebenen Dachöffnung hervor, die durch zumindest einen vorderen bewegbaren Dachabschnitt und eine daran anschließende, mit einer Heckscheibe versehene Heckklappe verschließbar ist, wobei der vordere bewegbare Dachabschnitt über seitlich angeordnete längsverlaufende Führungsschienen nach hinten unter die Heckklappe verlagerbar ist. Bei diesem Dachaufbau werden der vordere bewegbare Dachabschnitt, die dafür erforderlichen Führungsschienen und Antriebsmittel sowie die Heckklappe in einer Vielzahl von aufeinanderfolgenden Arbeitsgängen direkt am Montageband mit der Aufbaustruktur verbunden, wodurch sich eine zeitaufwendige Montage ergibt. Ferner ist eine Funktions- und Dichtigkeitsprüfung des Dachaufbaus erst nach der Fertigstellung des Fahrzeuges möglich.

Ferner zeigt EP-0 734 894 ein Kraftfahrzeug mit einem unteren offenen Aufbau, der einen Windschutzscheibenrahmen aufweist, der in Höhenrichtung gesehen im Bereich einer Gürtellinie des Fahrzeuges endet. Oberhalb dieser Gürtellinie ist ein durch ein separates kuppelförmiges Aufsatzteil gebildeter oberer Aufbau vorgesehen, der einen Fahrgastraum abdeckt. Hierbei ist die Dachöffnung dem kuppelförmigen Aufsatzteil zugeordnet.

Der Erfindung liegt daher die Aufgabe zugrunde, an einem Dachaufbau für ein Fahrzeug solche Vorkehrungen zu treffen, daß die Montagearbeiten am Montageband weiter vereinfacht und verkürzt werden.

Zur Lösung dieser Anforderungen wird gemäß der Erfindung ein Dachaufbau mit den kennzeichnenden Merkmalen des Patentanspruchs 1 vorgeschlagen. Vorteilhafte Ausgestaltungen der Erfindung sind den Unteransprüchen zu entnehmen.

Durch die Zusammenfassung des bewegbaren vorderen Dachabschnitts mit den zugeordneten Führungsschienen und den Antriebsmitteln sowie der Heckklappe zu einem vorgefertigten, in einem Tragrahmen aufgenommenen Modul läßt sich der komplette Dachaufbau außerhalb des Bandes fertigen und hinsichtlich Funktion und Dichtigkeit prüfen und beim Fahrzeughersteller schnell und einfach montieren.

Das vorgefertigte Modul wird in einfacher Weise durch die Windschutzscheibenöffnung des Fahrzeuges in den Fahrgastraum eingefahren und dann von unten über Zentrierstifte in die Dachöffnung eingesetzt. Der Tragrahmen ist über Schraubverbindungen mit den die Dachöffnung umgebenden Trägerabschnitten verbunden.

Die Montage des Moduls von unten hat den Vorteil, daß der Bauraum in den seitlichen Trägerabschnitten (Dachholmen) besser genutzt wird, wodurch sich eine größere lichte Öffnung in Querrichtung des Fahrzeuges ergibt

Ferner wird bei hohen Fahrgeschwindigkeiten durch den an der Fahrzeugoberseite wirkenden Unterdruck der Anpreßdruck der Dichtungen erhöht und somit das Geräuschniveau im Fahrgastraum positiv beeinflußt.

Die Scharniere und Gasfedern für die Heckklappe lassen sich außerhalb des Montagebandes in einfacher Weise am Tragrahmen des Moduls montieren.

Die Antriebsmittel sind am hinteren querverlaufenden Abschnitt des Tragrahmens angeordnet. Ferner trägt der Tragrahmen die beiden seitlichen längsverlaufenden Führungsschienen für den vorderen bewegbaren Dachabschnitt.

Der vordere Dachabschnitt und Heckklappe bilden in Schließstellung eine großflächige, außenhautbündige Glasfläche. Die seitlichen Führungsschienen sowie eine vordere und eine mittlere mit dem Tragrahmen verbundene Wasserfangleiste bilden einen umlaufenden Rahmen zur Wasserabführung. Zwischen gleichgerichteten Abschnitten von Aufbau und Tragrahmen ist ein umlaufendes Dichtband angeordnet, wodurch ein dichter Verbund zwischen Modul und Aufbau gegeben ist.

Nachfolgend ist ein Ausführungsbeispiel der Erfindung anhand der Zeichnung beschrieben.

Es zeigt:
- Fig. 1: eine perspektivische Ansicht von schräg hinten auf ein Fahrzeug mit einer großflächigen Dachöffnung und einem eingesetzten Dachaufbau in Schließstellung,
- Fig. 2: eine perspektivische Ansicht ähnlich Fig. 1, wobei der vordere bewegbare Dachabschnitt fast vollständig nach hinten unter die Heckklappe des Dachaufbaus geschoben ist,
- Fig. 3: eine perspektivische Ansicht von schräg vorne auf das vorgefertigte, in die Dachöffnung einsetzbare Modul, wobei die Heckklappe eine angehobene Zwischenstellung einnimmt,
- Fig. 4: einen Schnitt nach der Linie IV-IV der Fig. 1 in größerer Darstellung,
- Fig. 5: einen Schnitt nach der Linie V-V der Fig. 1 in größerer Darstellung,
- Fig. 6: einen Schnitt nach der Linie VI-VI der Fig. 1 in größerer Darstellung,
- Fig. 7: einen Schnitt nach der Linie VII-VII der Fig. 1 in größerer Darstellung,
- Fig. 8: einen Schnitt nach der Linie VIII-VIII der Fig. 1 in größerer Darstellung und
- Fig. 9: einen Schnitt nach der Linie IX-IX der Fig. 1 in größerer Darstellung.

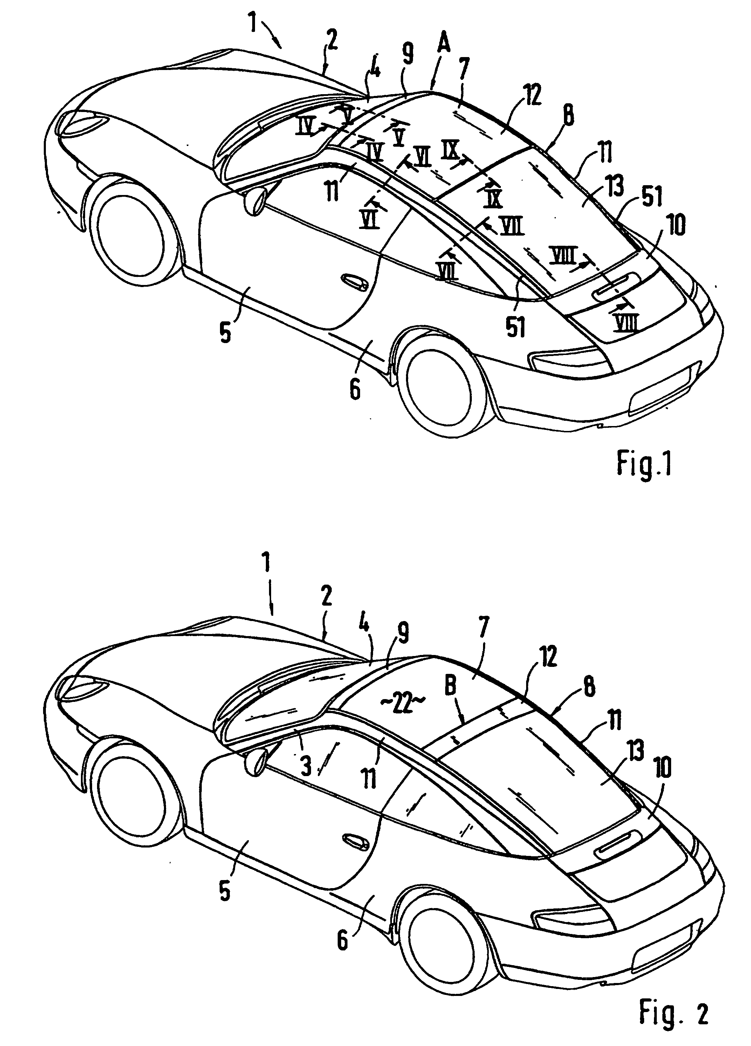

Das in Fig. 1 dargestellte, durch einen Personenkraftwagen gebildete Fahrzeug 1 weist einen Aufbau 2 auf, der sich aus einer in einem Windschutzscheibenrahmen 3 aufgenommenen Windschutzscheibe 4, seitlichen Türen 5, hinteren Seitenteilen 6 und einem in eine großflächige Dachöffnung 7 eingesetzten Dachaufbau 8 zusammensetzt.

Die Dachöffnung 7 ist umlaufend von aufbauseitigen Trägerabschnitten 9,10,11 umgeben, und zwar vorne durch den oberen querverlaufenden Abschnitt 9 des Windschutzscheibenrahmens 3, hinten durch einen Heckquerträger 10 und an beiden Längsseiten durch seitlich außenliegende aufbauseitige Dachholme 11. Gemäß Fig. 1 umfaßt der Dachaufbau 8 zumindest einen bewegbaren vorderen Dachabschnitt 12 und eine daran anschließende schwenkbare Heckklappe 13. In Schließstellung A des Dachaufbaus 8 verlaufen der Dachabschnitt 12 und die Heckklappe 13 außenhautbündig zueinander und zu den angrenzenden Außenseiten der Trägerabschnitte 9, 10, 11 und bilden eine großflächige Glasfläche.

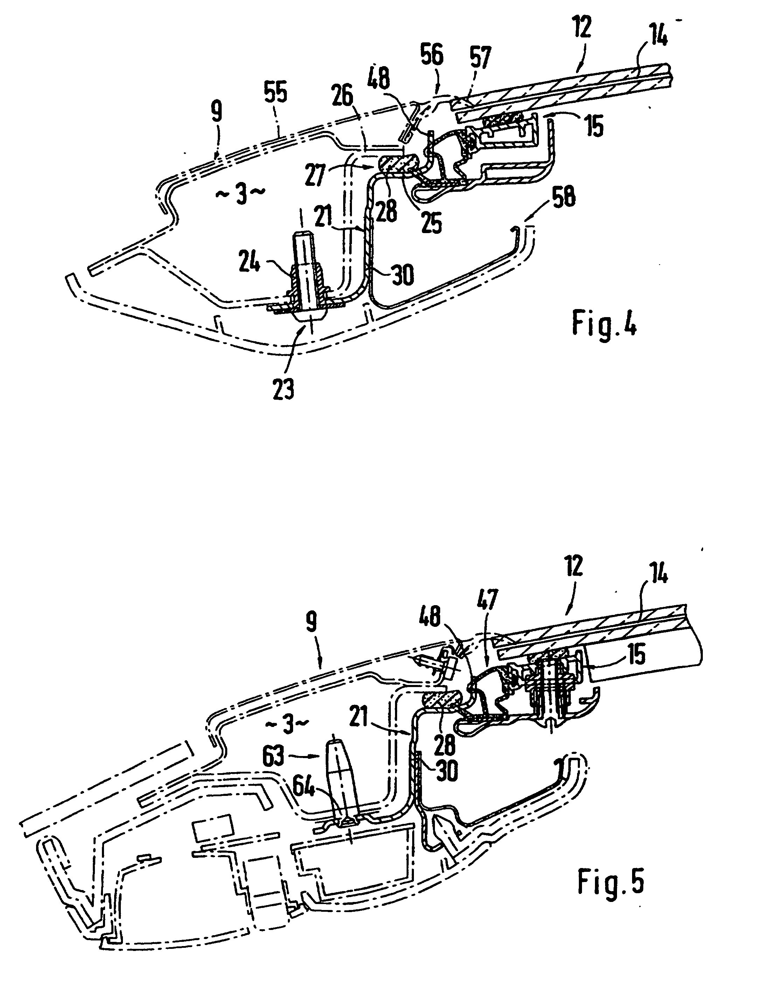

Der vordere Dachabschnitt 12 umfaßt eine äußere Glasscheibe 14 und einen innenliegenden, umlaufenden Rahmen 15, wobei die Glasscheibe 14 durch Verklebung mit dem Rahmen 15 verbunden ist (Fig. 4).

Gemäß den Fig. 1 und 2 ist der vordere Dachabschnitt 12 ausgehend von der in Fig. 1 dargestellten Schließstellung A über eine translatorische Bewegung nach hinten unter die schwenkbare Heckklappe 13 verlagerbar und umgekehrt. Der Dachabschnitt 12 kann zumindest teilweise oder nahezu vollständig in eine Öffnungsstellung B unter die Heckklappe 13 geschoben werden. Zur Verstellbewegung des vorderen Dachabschnitts 12 sind zu beiden Längsseiten der Dachöffnung 7 sich in Fahrzeuglängsrichtung erstreckende Führungsschienen 16 angeordnet, in denen nicht näher dargestellte Gleitelemente des bewegbaren Dachabschnitts 12 verschiebbar geführt sind.

Die Längsverschiebung des vorderen Dachabschnitts 12 erfolgt mittels mechanischer und/oder elektrischer Antriebsmittel 17. Der Dachaufbau 8 kann auch mehrere bewegbare, hintereinanderliegend angeordnete Dachabschnitte 12 umfassen (nicht näher dargestellt).

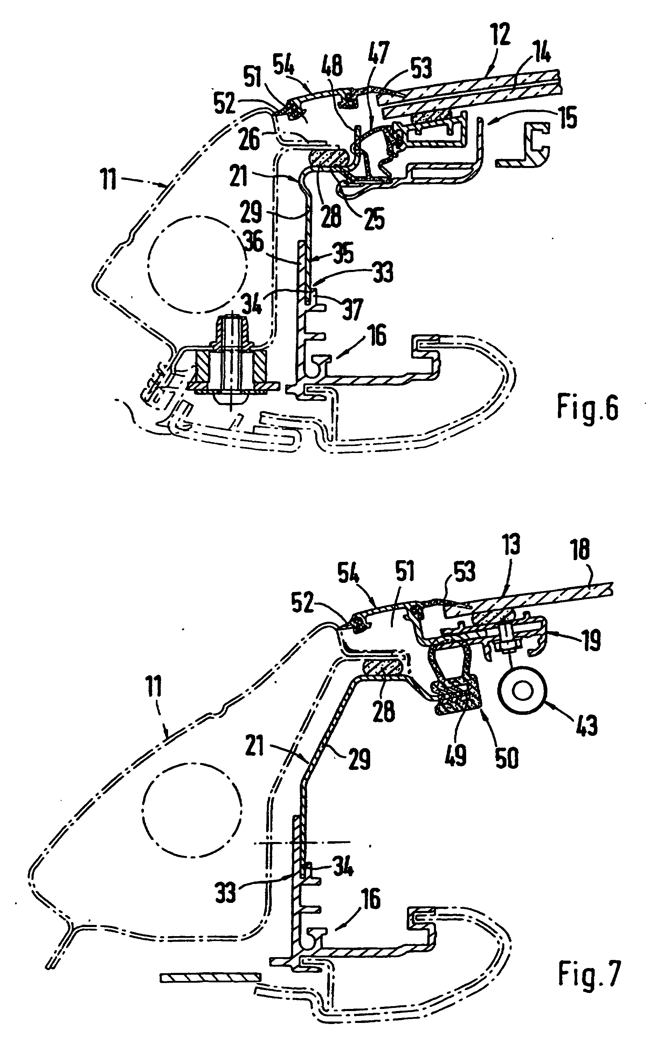

Die Heckklappe 13 setzt sich gemäß Fig. 7 aus einer außenliegenden Heckscheibe 18 und einem umlaufenden, innenliegenden Rahmen 19 zusammen und ist von der in Fig. 1 dargestellten Schließstellung A über Zwischenstellungen C in eine nicht näher dargestellte Öffnungsstellung schwenkbar und umgekehrt. Die Heckscheibe 18 ist durch eine Verklebung mit dem Rahmen 19 verbunden.

Bei zumindest teilweise zurückgeschobenen vorderem Dachabschnitt 12 wird benachbart dem oberen querverlaufenden Abschnitt 9 des Windschutzscheibenrahmens 3 ein nicht näher gezeigter Windabweiser selbsttätig von einer eingefahrenen Ruhestellung in eine ausgefahrenen Betriebsstellung bewegt, um Wummergeräusche im Fahrgastraum 22 während des Fahrbetriebes zu vermeiden.

Erfindungsgemäß bilden der zumindest eine bewegbare Dachabschnitt 12 mit den zugeordneten Führungsschienen 16 und Antriebsmitteln 17 und die nach hinten anschließende schwenkbare Heckklappe 13 ein vorgefertigtes Modul 20, das mit den aufbauseitigen Trägerabschnitten 9, 10, 11 dichtend verbunden ist, wobei der Dachabschnitt 12, die Führungsschienen 16, die Antriebsmittel 17 und die Heckklappe 13 von einem umlaufenden Tragrahmen 21 aufgenommen sind. Das vorgefertigte Modul 20 wird bei der Montage von vorne durch die Windschutzscheibenöffnung des Fahrzeuges 1 in den Fahrgastraum 22 eingefahren, anschließend von unten her in die Dachöffnung 7 eingesetzt und an den aufbauseitigen Trägerabschnitten 9,10,11 befestigt. Dies erfolgt beispielsweise durch mehrere örtlich über den Umfang der Dachöffnung 7 vorgesehene Befestigungsschrauben 23.

Die Befestigungsschrauben 23 werden vom Fahrgastraum 22 her in aufbauseitig angeordnete Muttern 24 eingedreht (Fig. 4).

Zwischen gleichgerichteten Flanschen 25, 26 der aufbauseitigen Trägerabschnitte 9, 10,11 und des Tragrahmens 21 ist ein umlaufendes Dichtelement 27 vorgesehen.

Das Dichtelement 27 wird beispielsweise durch ein geschlossenes Nittoband 28 gebildet, das an der Oberseite eines Flansches 25 des Tragrahmens 21 vormontiert ist, wobei sich das Dichtelement 27 zwischen der Oberseite des Flansches 25 und der Unterseite eines die Dachöffnung 7 begrenzenden Flansches 26 der aufbauseitigen Trägerabschnitte 9, 10, 11 erstreckt.

Der umlaufende Tragrahmen 21 setzt sich aus mehreren, unterschiedlich profilierten durch Schweißen miteinander verbundenen Blechpreßteilen zusammen und umfaßt seitliche, längsverlaufende Rahmenteile 29, ein vorderes, querverlaufendes Rahmenteil 30, ein hinteres querverlaufendes Rahmenteil 31 und im gemeinsamen Verbindungsbereich von Dachabschnitt 12 und Heckklappe 13 einen zusätzlichen profilierten Quersteg 32. Auf den oberen Rand des Quersteges 32 ist ein Dichtprofil 59 aufgesteckt, das mit beiden angrenzenden Bauteilen 12, 13 dichtend zusammenwirkt.

Die Führungsschienen 16 für den in Längsrichtung bewegbaren Dachabschnitt 12 erstrecken sich entlang der beiden seitlichen Rahmenteile 29 des Tragrahmens 21 und sind mit den seitlichen Rahmenteilen 29 fest verbunden. Dies kann durch Nieten, Schrauben, Schweißen oder dgl. erfolgen.

Gemäß den Fig. 6 und 7 umgreift ein etwa u-förmiger nach oben hin offener Aufnahmeabschnitt 33 der Führungsschiene 16 das freie, untere Ende 34 der aufrechten Schenkel 35 der seitlichen Rahmenteile 29, wobei ein äußerer Steg 36 des u-förmigen Aufnahmeabschnitts 33 eine größere Höhe aufweist als der innere Steg 37. Die Profilierung des Tragrahmens 21 ist zumindest im vorderen querverlaufenden Bereich und an beiden Längsseiten dem Formverlauf des angrenzenden inneren Blechteils des jeweiligen Trägerabschnitts 9, 11 angepaßt und verläuft zumindest bereichsweise etwa parallel zu diesem.

Die Heckklappe 13 ist an beiden oberen seitlich außenliegenden Randbereichen über Scharniere 38 mit den seitlichen Rahmenteilen 29 des Tragrahmens 21 verbunden.

Im Ausführungsbeispiel wird jedes Scharnier 38 durch ein aushebendes Viergelenkscharnier gebildet. Jedes Viergelenkscharnier umfaßt eine am seitlichen Rahmenteil 29 befestigte erste Halteplatte 39, eine mit dem Rahmen 19 der Heckklappe 13 verbundene zweite Halteplatte 40 und zwei nach Art eines Viergelenks angeordnete Lenker 41 42, wobei jeder Lenker 41, 42 einerseits mit der ersten Halteplatte 39 und andererseits mit der zweiten Halteplatte 40 gelenkig verbunden ist. Der vorne liegende Lenker 41 weist eine kürzere Länge auf als der hinten liegende Lenker 42.

Zur Unterstützung der Öffnungsbewegung der Heckklappe 13 ist zumindest an einer Längsseite der Heckklappe 13 eine Gasfeder 43 vorgesehen. Vorzugsweise sind an beiden Längsseiten der Heckklappe 13 Gasfedern 43 angeordnet.

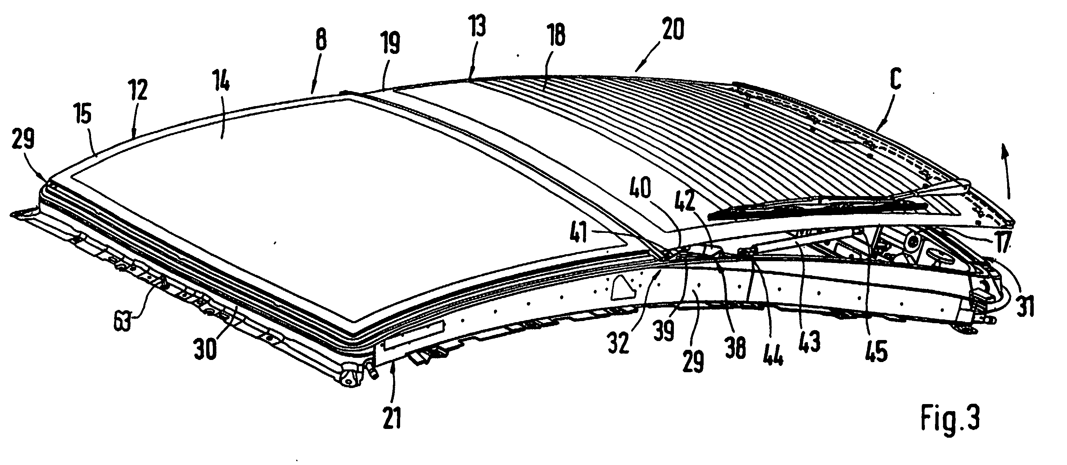

Ein Ende 44 jeder Gasfeder.ist an das seitliche Rahmenteil 29 des Tragrahmens 21 und das andere Ende 45 ist an die Innenseite der Heckklappe 13 angeschlossen (Fig. 3).

Am hinteren querverlaufenden Rahmenteil 31 des Tragrahmens 21 ist ein Teil einer Verschlußeinrichtung 46 für die Heckklappe 13 vorgesehen, wobei die Verschlußeinrichtung 46 mit einer Zuziehhilfe ausgestattet sein kann.

Am innenliegenden Rahmen 15 des bewegbaren Dachabschnittes 12 ist ein Dichtkörper 47 angeordnet, der bei geschlossenem vorderen Dachabschnitt 12 mit Flanschen 25, 48 des Tragrahmens 21 zusammenwirkt (Fig. 5).

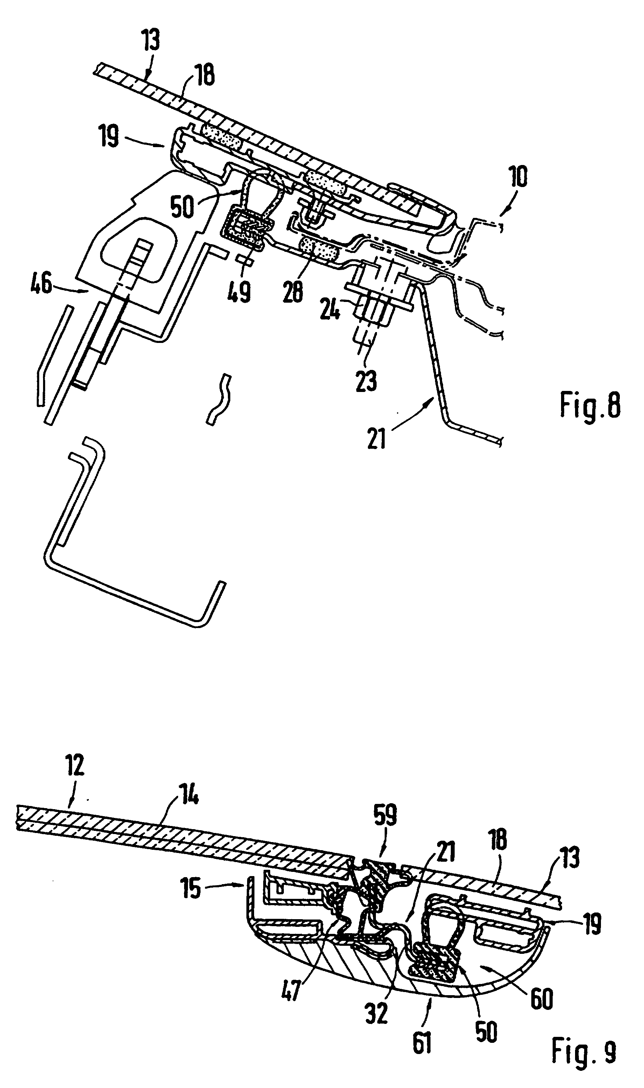

Im Bereich der Heckklappe 13 ist auf das obere freie Ende 49 des Tragrahmens 21 ein weiterer Dichtkörper 50 aufgesteckt, dessen Schlauchprofil bei geschlossener Heckklappe 13 mit dem inneren Rahmen 19 der Heckklappe 13 dichtend zusammenwirkt (Fig. 7 und 8).

Die beiden seitlich außenliegenden längsverlaufenden Dachkanäle 51 zwischen dem bewegbaren Dachabschnitt 12 bzw. der Heckklappe 13 und dem weiter außenliegenden Trägerabschnitt 11 sind jeweils durch eine beidseitig mit Dichtlippen 52, 53 versehene Abdeckleiste 54 verkleidet (Fig. 6 und 7).

Im vorderen querverlaufenden Bereich sitzt an einer Abdeckblende 55 des oberen Windschutzscheibenrahmens 9 ein lippenartiges Dichtelement 56, wobei das freie Ende der Dichtlippe 57 sich an der Außenseite des vorderen Randes des bewegbaren Dachabschnitts 12 abstützt (Fig. 4).

Ferner ist am vorderen querverlaufenden Rahmenteil 30 des Tragrahmens 21 eine rinnenförmige Wasserfangleiste 58 angebracht. An den beiden Längsseiten der Dachöffnung 7 haben die Führungsschienen 16 die Funktion von Wasserfangleisten.

Im Bereich des Quersteges 32 bildet ein muldenförmiger Abschnitt 60 einer Leiste 61 eine querverlaufende Wasserfangleiste. Am vorderen und hinteren Endbereich des Tragrahmens 21 sind an beiden Längsseiten jeweils Anschlußnippel 62 zur Wasserabführung vorgesehen.

Zur Erleichterung der Montage beim Einsetzen des Moduls 20 ist am vorderen querverlaufenden Rahmenteil 30 des Tragrahmens 21 zumindest ein nach oben ragender Zentrierzapfen 63 angeordnet, der in eine korrespondierende Öffnung 64 des Trägerabschnittes 9 eingesetzt wird (Fig. 5).

## Patentansprüche

1. Dachaufbau (8) für ein Fahrzeug (1) mit einer großflächigen, von aufbauseitigen Trägerabschnitten (9, 10, 11) umgebenen Dachöffnung (7), die durch zumindest einen vorderen bewegbaren Dachabschnitt (12) und eine daran anschließende Heckklappe (13) verschließbar ist, wobei der vordere bewegbare Dachabschnitt (12) über seitlich angeordnete sich in Fahrzeuglängsrichtung erstreckende Führungsschienen (16) und Antriebsmittel (17) nach hinten unter die Heckklappe (13) verlagerbar ist, **dadurch gekennzeichnet, daß** der zumindest eine bewegbare Dachabschnitt (12), die zugeordneten Führungsschienen (16), die Heckklappe (13) und die Antriebsmittel (17) von einem umlaufenden Tragrahmen (21) aufgenommen sind und mit diesem ein vorgefertigtes Modul (20) bilden, das unter Zwischenschaltung eines umlaufenden Dichtelements (27) mit den aufbauseitigen Trägerabschnitten (9,10,11) verbunden ist die vorne durch den oberen querverlaufenden Abschnitt (9) des Wind-schutzscheibenrahmens (3), hinten durch einen Heckquerträger (10) und an beiden Längsseiten durch seitlich außenliegende aufbauseitige Dachholme (11) gebildet werden.

2. Dachaufbau (8) nach Anspruch 1, **dadurch gekennzeichnet, daß** das vorgefertigte Modul (20) durch eine Windschutzscheibenöffnung des Fahrzeuges (1) in den Fahrgastraum (22) einführbar und von unten her in die Dachöffnung (7) einsetzbar ist.

3. Dachaufbau (8) nach den Ansprüchen 1 und 2, **dadurch gekennzeichnet, daß** der Tragrahmen (21) örtlich über Schraubverbindungen mit dem die Dachöffnung (7) umgebenden Trägerabschnitten (9, 10, 11) verbunden ist.

4. Dachaufbau (8) nach Anspruch 1, **dadurch gekennzeichnet, daß** das Dichtelement (27) durch ein umlaufendes Nittoband (28) gebildet wird, das an der Oberseite eines Flansches (25) des Tragrahmens (21) vormontiert ist, wobei sich das Nittoband (28) zwischen der Oberseite des Flansches (25) und der Unterseite eines die Dachöffnung (7) begrenzenden gleichgerichteten Flansches (26) der aufbauseitigen Trägerabschnitte (9, 10, 11) erstreckt.

5. Dachaufbau (8) nach einem der vorhergehenden Ansprüche, **dadurch gekennzeichnet, daß** beide seitlichen Rahmenteile (28, 29) des Tragrahmens (21) im gemeinsamen Verbindungsbereich von bewegbarem Dachabschnitt (12) und Heckklappe (13) durch einen profilierten Quersteg (32) miteinander verbunden sind und daß an der Oberseite des Quersteges (32) ein Dichtkörper (59) vorgesehen ist.

6. Dachaufbau (8) nach einem der vorhergehenden Ansprüche, **dadurch gekennzeichnet, daß** die Heckklappe (13) an beiden oberen seitlich außenliegenden Randbereichen über Scharniere (38) mit seitlichen Rahmenteilen (29) des Tragrahmens (21) verbunden ist.

7. Dachaufbau (8) nach Anspruch 6, **dadurch gekennzeichnet, daß** jedes Scharnier (38) als aushebendes Viergelenkscharnier ausgebildet ist.

8. Dachaufbau (8) nach einem der vorhergehenden Ansprüche, **dadurch gekennzeichnet, daß** zumindest an einer Längsseite der Heckklappe (13) eine die Öffnungsbewegung der Heckklappe (13) unterstützende Gasfeder (43) vorgesehen ist, wobei ein Ende (44) der Gasfeder (43) am seitlichen Rahmenteil (29) des Tragrahmens (21) und das andere Ende (45) an der Innenseite der Heckklappe (13) drehbar angelenkt ist.

9. Dachaufbau (8) nach einem der vorhergehenden Ansprüche, **dadurch gekennzeichnet, daß** am hinteren querverlaufenden Rahmenteil (31) des Tragrahmens (21) ein Teil einer Verschlußeinrichtung (46) für die Heckklappe (13) vorgesehen ist, wobei die Verschlußeinrichtung (46) gegebenenfalls mit einer Zuziehhilfe versehen ist.

## Claims

1. A roof structure (8) for a vehicle (1), comprising a large-area roof opening (7) which is surrounded by supporting parts (9, 10, 11) of the bodywork and is closable by at least one movable front roof portion (12) and an adjoining tailgate (13), wherein the movable front roof portion (12) is displaceable rearwards under the tailgate (13) by means of laterally arranged guide rails (16), extending in the longitudinal direction of the vehicle, and drive means (17), **characterised in that** the at least one movable roof portion (12), the associated guide rails (16), the tailgate (13) and the drive means (17) are held by a circumferential supporting frame (21) and, together therewith, form a prefabricated module (20) which, with interposition of a circumferential sealing element (27), is connected to the supporting parts (9, 10, 11) of the bodywork, formed at the front by the upper, transversely extending portion (9) of the windscreen frame (3), at the rear by a transverse tail member (10) and on both longitudinal sides by outer lateral longitudinal roof members (11) of the bodywork.

2. A roof structure (8) according to claim 1, **characterised in that** the prefabricated module (20) is introducible into the vehicle interior (22) through a windscreen opening of the vehicle (1) and is insertable into the roof opening (7) from below.

3. A roof structure (8) according to claims 1 and 2, **characterised in that** the supporting frame (21) is locally connected to the supporting parts (9, 10, 11) surrounding the roof opening (7) by means of screw connections.

4. A roof structure (8) according to claim 1, **characterised in that** the sealing element (27) is formed by a circumferential Nitto strip (28) premounted on the upper side of a flange (25) of the supporting frame (21), wherein the Nitto strip (28) extends between the upper side of the flange (25) and the underside of a parallel flange (26) of the supporting parts (9, 10, 11) of the bodywork, the flange (26) bounding the roof opening (7).

5. A roof structure (8) according to any one of the preceding claims, **characterised in that** the two lateral frame parts (28, 29) of the supporting frame (21) are connected to one another in the common connecting region of the movable roof portion (12) and the tailgate (13) by a profiled crosspiece (32) and **in that** a sealing member (59) is provided on the upper side of the crosspiece (32).

6. A roof structure (8) according to any one of the preceding claims, **characterised in that** the tailgate (13) is connected to lateral frame parts (29) of the supporting frame (21) in both upper, outer, lateral edge regions by means of hinges (38).

7. A roof structure (8) according to claim 6, **characterised in that** each hinge (38) is formed as a four-bar lifting hinge.

8. A roof structure (8) according to any one of the preceding claims, **characterised in that** a gas spring (43) assisting the opening movement of the tailgate (13) is provided at least on one longitudinal side of the tailgate (13), one end (44) of the gas spring (43) being pivoted on the lateral frame part (29) of the supporting frame (21) and the other end (45) being pivoted on the inside of the tailgate (13).

9. A roof structure (8) according to any one of the preceding claims, **characterised in that** part of the closing arrangement (46) for the tailgate (13) is provided on the rear, transversely extending frame part (31) of the supporting frame (21), the closing arrangement (46) optionally being provided with a shutting aid.

## Revendications

1. Structure de toit (8) pour un véhicule (1) présentant une ouverture de toit (7) de grande surface, entourée par des tronçons de poutre (9, 10, 11) et qui peut être fermée par au moins un tronçon de toit (12) avant déplaçable et un hayon arrière (13) s'y raccordant, le tronçon de toit (12) avant déplaçable pouvant être déplacé vers l'arrière sous le hayon arrière (13), par des rails de guidage (16) disposés latéralement et s'étendant dans la direction longitudinale du véhicule, ainsi que par des moyens d'entraînement (17), **caractérisée en ce que** le ou les tronçons de toit (12) déplaçables, les rails de guidage (16), le hayon arrière (13) et les moyens d'entraînement (17) sont reçus par un cadre de support (21) périphérique et forment avec celui-ci un module (20) préfabriqué qui est relié, par interposition d'un élément d'étanchéité (27) périphérique, aux tronçons de poutre (9, 10, 11) côté structure qui sont formés à l'avant par le tronçon (9), s'étendant transversalement, du cadre (3) du pare-brise, à l'arrière par une traverse arrière (10) et sur les deux côtés longitudinaux par des longerons de toit (11) côté carrosserie situés latéralement à l'extérieur.

2. Structure de toit (8) selon la revendication 1, **caractérisée en ce que** le module (20) préfabriqué peut être introduit dans l'habitacle (22), à travers une ouverture du pare-brise du véhicule (1), et inséré depuis le bas dans l'ouverture de toit (7).

3. Structure de toit (8) selon les revendications 1 et 2, **caractérisée en ce que** le cadre de support (21) est relié par endroits, par des liaisons filetées, aux tronçons de poutre (9, 10, 11) entourant l'ouverture de toit (7).

4. Structure de toit (8) selon la revendication 1, **caractérisée en ce que** l'élément d'étanchéité (27) est formé par une bande "Nitto" (28) périphérique qui est prémontée sur le côté supérieur d'une bride (25) du cadre de support (21), la bande nitto (28) s'étendant entre le côté supérieur de la bride (25) et le côté inférieur d'une bride (26) dirigée dans le même sens, délimitant l'ouverture de toit (7), des tronçons de poutre (9, 10, 11) côté carrosserie.

5. Structure de toit (8) selon les revendications précédentes, **caractérisée en ce que** les deux parties de cadre (28, 29) latérales du cadre de support (21) sont reliées entre elles dans la zone de liaison commune du tronçon de toit (12) déplaçable et du hayon arrière (13), par une entretoise (32) profilée, et **en ce que** sur la face supérieure de l'entretoise (32) est prévu un corps d'étanchéité (59).

6. Structure de toit (8) selon l'une des revendications précédentes, **caractérisée en ce que** le hayon arrière (13) est relié, sur les deux zones de bordure supérieures situées latéralement à l'extérieur, par des charnières (38), à des parties de cadre (29) latérales du cadre de support (21).

7. Structure de toit (8) selon la revendication 6, **caractérisée en ce que** chaque charnière (38) est réalisée comme charnière à quatre articulations se soulevant.

8. Structure de toit (8) selon l'une des revendications précédentes, **caractérisé en ce qu'**il est prévu, au moins sur un côté longitudinal du hayon arrière (13), un ressort à gaz (43) favorisant le mouvement d'ouverture du hayon arrière (13), une extrémité (44) du ressort à gaz (43) étant articulée tournante sur la partie de cadre (29) latérale du cadre de support (21) et l'autre extrémité (45), sur le côté intérieur du hayon arrière (13).

9. Structure de toit (8) selon l'une des revendications précédentes, **caractérisée en ce que** sur la partie de cadre (31) arrière s'étendant transversalement du cadre de support (21), est prévue une partie d'un dispositif de fermeture (46) pour le hayon arrière (13), le dispositif de fermeture (46) étant éventuellement pourvu d'une aide à la fermeture.
